# EUROPÄISCHE PATENTSCHRIFT

(11) **EP 0 988 200 B1**
(45) Veröffentlichungstag und Bekanntmachung des Hinweises auf die Patenterteilung: **16.10.2002**
(21) Anmeldenummer: 98937450.9
(22) Anmeldetag: 05.06.1998
(51) Int. Cl.: B60T 8/36, F15B 1/027

(54) **HYDRAULISCHES AGGREGAT**
HYDRAULIC UNIT
ORGANE HYDRAULIQUE

(30) Priorität: 13.06.1997 DE 19725092
(43) Veröffentlichungstag der Anmeldung: 29.03.2000
(73) Patentinhaber: Continental Teves AG & Co. oHG, 60488 Frankfurt am Main (DE)
(72) Erfinder: REINARTZ, Hans-Dieter, D-60439 Frankfurt (DE); DINKEL, Dieter, D-65817 Eppstein (DE); SONNENSCHEIN, Georg, D-65760 Eschborn (DE); RISCH, Stephan, D-64331 Weiterstadt (DE)
(86) Internationale Anmeldenummer: EP9803383
(87) Internationale Veröffentlichungsnummer: WO98056630

(56) Entgegenhaltungen:
- EP-A- 0 379 957
- EP-A- 0 699 571
- EP-A- 0 770 530
- DE-A- 4 234 013
- DE-A- 4 306 222
- GB-A- 2 253 665
- US-A- 4 828 335

## Beschreibung

Die Erfindung bezieht sich auf ein hydraulisches Aggregat bestehend aus einem mehrere Seiten- und Grundflächen aufweisenden metallischen Ventilblock, der von Druckmittelkanälen durchzogen ist und mindestens ein elektromagnetisch betätigbares Ventil enthält. Im Ventilblock ist weiterhin ein Niederdruckspeicher angeordnet, der aus einem Gehäuse und einem darin geführten Speicherkolben besteht.

Derartige hydraulische Aggregate werden u.a. in Bremsschlupfregelanlagen eingesetzt. In diesen Fällen enthält der Ventilblock auch eine Kolbenpumpe, die von einem an dem Ventilblock angeflanschten Elektromotor angetrieben wird. Beispielhaft sei das in der US-PS 50227171 beschriebene hydraulische Aggregat genannt. In der dort beschriebenen Version ist der Niederdruckspeicher vollständig im Ventilblock integriert, was bedeutet, daß der Speicherkolben in einer Sacklochbohrung im Ventilblock geführt ist, die von einer an die entsprechende Seitenfläche des Ventilblocks angeschraubten Platte verschlossen ist. Die Speicherfeder ist zwischen dem Speicherkolben und der Platte angeordnet. Die Tiefe der Sacklochbohrung wird bestimmt von der axialen Ausdehnung des Speicherkolbens und der Speicherfederlänge, die wiederum mit dem für die jeweilige Anlage notwendigerweise vorzusehenden maximalen Aufnahmevolumen des Niederdruckspeichers korrespondiert. Dabei ist u.a. zu beachten, daß auch bei einem maximal gefüllten Nieder-Niederdruckspeichers korrespondiert. Dabei ist u.a. zu beachten, daß auch bei einem maximal gefüllten Niederdruckspeicher der Speicherdruck nicht zu groß werden darf. Aus diesem Grund darf z.B. die Speicherfeder nicht auf Blockmaß zusammengedrückt werden. Dies berücksichtigend ergibt sich ein Raumbedarf für den Niederdruckspeicher, der deutlich größer ist als die maximale Volumenaufnahme. Dieses steht im Gegensatz zu der Forderung aus Gewichts- und Raumgründen den Ventilblock möglichst klein zu gestalten.

In der EP-A-0770530 ist ein hydraulisches Aggregat beschrieben, das an einer Stirnfläche eines Ventilblocks eine Gehäusekappe aufweist, die den in der Stirnfläche eingelassenen Niederdruckspeicher und mehrere Ventile abdeckt. Der Niederdruckspeicher ist in einer Bohrung des Ventilblocks vollständig versenkt und mit einer Abdeckung versehen, die sich zwischen der Gehäusekappe und der Stirnfläche des Ventilblocks in den Hohlraum der Gehäusekappe erstreckt.

Aus der gattungsbildenden DE-A-42 34 013 A1 ist bereits ein hydraulisches Aggregat bekannt geworden, dessen Niederdruckspeicher an einer Seitenfläche des Ventilblocks mit einem deckelförmigen Anbauteil verschlossen ist, während mehrere elektromagnetisch betätigbare Ventile an einer rechtwinklig zur Seitenfläche verlaufenden Stirnfläche des Ventilblocks angeordnet sind, wobei sich durch den Ventilblock eine Bohrung zur Herstellung einer für den Anschluß eines Elektromotors vorgesehenen Kabeldurchführung erstreckt. Die Verteilung des Niederdruckspeichers und der Ventile auf verschiedene Gehäuseflächen sowie die Notwendigkeit zur Herstellung einer Durchgangsbohrung zur Kabeldurchführung beschränken die Möglichkeit zur Verkleinerung und Herstellvereinfachung des Aggregats.

Daher ist es die Aufgabe der Erfindung, das hydraulische Aggregat der angegebenen Art mit einfachen Mitteln noch kleiner und leichter zu gestalten als dies die bisher vorgeschlagene Lösung vorsieht.

Diese Aufgabe wird für das hydraulische Aggregat der gattungsbildenden Art erfindungsgemäß durch die Merkmale des Anspruchs 1 gelöst.

Der Speicherkolben wird in dem Anbauteil geführt, wobei der Teil des Gehäuses des Niederdruckspeichers, der vom Ventilblock selbst gebildet ist, ein Volumen radial einschließt, das in etwa dem maximalen Speichervolumen des Niederdruckspeichers entspricht.

Ein derartig ausgebildeter Niederdruckspeicher bietet sich insbesondere dann an, wenn die Anzahl der zur Druckregelung benötigten, im Ventilblock integrierten Ventile klein ist. Im Stand der Technik ist vorgesehen, die Ventilaktuatoren nebeneinander an einer Grundfläche des Ventilblocks anzuordnen. Bei einer Anlage mit reduzierter Ventilzahl verbleibt im dem Raum neben dem Ventilblock, in dem die Aktuatoren angeordnet sind, ein Bereich, in den das Anbauteil hineinragen kann.

Üblicherweise werden die Aktuatoren von einer Gehäusekappe am Ventilblock überdeckt, die u.a. auch die Steuerungselektronik aufnimmt. Bei der vorgeschlagenen Anordnung wird dabei gleichzeitig der Niederdruckspeicher in den von der Gehäusekappe eingeschlossenen Raum aufgenommen und damit gegen Außeneinflüsse geschützt. Dies ermöglicht es u.a. das Anbauteil topfartig aus einem tiefgezogenen Blechteil auszubilden, das in eine flache Sacklochbohrung im Ventilblock eingesetzt ist. Dazu weist das Anbauteil einen nach außen weisenden flanschartigen Bördelrand auf, der gleichzeitig einem in einer stufenartigen Erweiterung der Sacklochbohrung liegenden Dichtring als Anlagefläche dient.

Der Speicherkolben ist ebenfalls als Tiefziehteil in Topfform ausgebildet, wobei Anbauteil und Speicherkolben jeweils mit den offenen Seiten zueinander ausgerichtet ineinander gesteckt sind. Der von dem Speicherkolben und dem Anbauteil eingeschlossene Raum nimmt die Speicherfeder auf, die sich einerseits am Boden des Speicherkolbens und andererseits am Boden des Anbauteils abstützt.

Der vom Speicherkolben in der Sacklochbohrung im Ventilblock eingeschlossene Speicherraum steht über eine gerade Bohrung mit einer Querbohrung im Ventilblock in Verbindung, in der ein Pumpenkolben geführt ist und die in eine Dämpfungskammer einmündet. In die Einmündung der Verbindungsbohrung in die Speicherkammer ist ein Rückschlagventil eingesetzt, das das Pumpensaugventil für die Pumpe bildet. Das Pumpendruckventil dieser Pumpe ist ebenfalls als Rückschlagventil ausgebildet und in die Einmündung der Querbohrung in die Dämpfungskammer eingesetzt.

Parallel zur Querbohrung verläuft eine Verbindungsbohrung zwischen der Dämpfungskammer und einem Druckmittelkanal im Ventilblock, die unmittelbar vor der Einmündung in den Kanal blendenartig verengt ist.

Der Elektromotor ragt über eine Seitenfläche des Ventilblocks hinaus, so daß ein Verbindungskabel ausgehend vom Lagerschild des Motorgehäuses an der Seite des Ventilblocks vorbeigeführt und zu dem innerhalb der Gehäusekappe angeordneten elektronischen Regler geführt werden kann.

Damit die Kabelverbindung gegen äußere Einflüsse geschützt ist, weist die Gehäusekappe eine Verlängerung auf, die am Ventilblock vorbei bis zum Lagerschild geführt ist. Die Verlängerung bildet zusammen mit der Seitenwand des Ventilblocks einen Kanal, durch den das elektrische Verbindungskabel geführt ist.

Im folgenden soll der Erfindungsgedanke anhand eines Ausführungsbeispiels näher erläutert werden. Dazu zeigen:
- Fig. 1: eine Draufsicht auf den erfindungsgemäßen Ventilblock,
- Fig. 2: einen Schnitt entlang der Linie II-II der Fig. 1 und
- Fig. 3: einen Schnitt durch den Ventilblock auf Höhe der Pumpenkolben senkrecht zum Schnitt der Fig. 2.

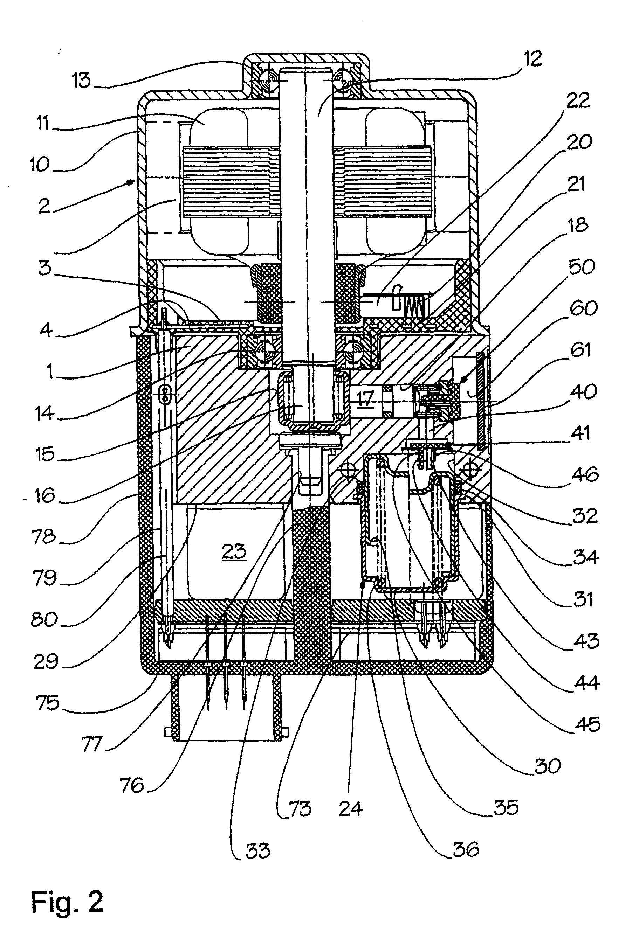

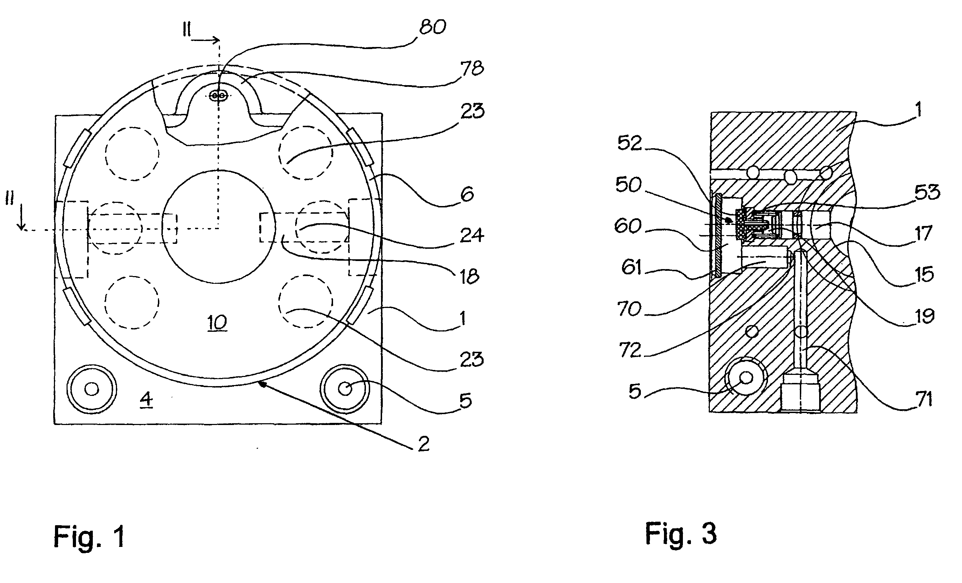

Zunächst wird auf die Fig. 1 Bezug genommen. Ein Ventilblock 1 weist eine in etwa quadratische laterale Ausdehnung auf. Ein Elektromotor 2 ist mit seinem Lagerschild 3 auf eine quadratische Grundfläche 4 des Ventilblocks versetzt zur Zentralachse aufgesetzt, so daß der Lagerschild 3 an einer Seite über die Grundfläche 4 hinausragt. Auf dem freien, nicht vom Elektromotor 2 überdeckten Flächenabschnitt auf der anderen Seite der Grundfläche 4 sind Radanschlüsse 5 vorgesehen. Das Gehäuse 10 des Elektromotors 2 wird von über einen flanschartigen Rand 6 des Gehäuses 10 greifenden Verstemmungen am Ventilblock 1 gehalten.

Die Fig. 2 zeigt einen Schnitt entlang der abgewinkelten Linie II-II, d.h., daß die beiden Bildhälften senkrecht zueinander stehen. Mittig dargestellt erkennt man den Ventilblock 1 auf dessen oberer Grundfläche 4 - wie schon erläutert - der Elektromotor 2 aufgesetzt und befestigt ist. Dieser besteht aus einem topfförmigen Gehäuse 10 mit Permanentmagneten an seiner Innenseite, dem Lagerschild 3 sowie einem Rotor 11, dessen Welle 12 von einem ersten Lager 13 im Boden des Gehäuses 10 und einem zweiten Lager 14 im Lagerschild 3 getragen wird. Die Welle 12 des Rotors 11 ragt durch das Lagerschild 3 in eine Stufenbohrung 15 im Ventilblock hinein und trägt an ihrem Ende einen Exzenter 16, an den zwei Pumpenkolben 17 abgestützt sind, die in Querbohrungen 18 geführt werden und jeweils einen Pumpenraum 19 begrenzen. Die Querbohrungen 18 münden in den Abschnitt der Stufenbohrung 15 ein, die den Exzenter 16 der Motorwelle 12 aufnimmt. Wegen des gewählten winkligen Schnittes ist in der Fig. 2 nur eine Querbohrung 18 mit einem Pumpenkolben 17 zu erkennen. In der Fig. 1 sind beide Bohrungen 18 strichpunktiert angedeutet.

Der Lagerschild 3 dient gleichzeitig als Bürstentrageplatte. An der Innenseite des Lagerschildes 3 befinden sich daher zwei ggf. auch vier Bürstenköcher 20. Die elektrische Verbindung zu den in den Köchern 20 geführten Bürsten 22 wird über metallische Leiterbahnen 21 hergestellt, die in den Lagerschild 3 aus Kunststoff eingelassen sind. An der Außenseite weist der Lagerschild 3 nicht dargestellte Dichtlippen auf, die an der oberen Grundfläche des Ventilblocks 1 angelegt sind und verhindern, daß Feuchtigkeit zur Stufenbohrung 15 dringt.

An der der oberen Grundfläche 4 des Ventilblocks 1 gegenüberliegenden unteren Grundfläche 29 sind mehrere Ventilaktuatoren d.h. Magnetspulen 23 angeordnet, die jeweils auf eine geschlossene am Ventilblock 1 angeordnete Hülse aufgesteckt sind, in deren Inneren zur Betätigung von Ventilen im Ventilblock 1 jeweils ein Magnetkern und ein Magnetanker befestigt bzw. geführt ist. Außerdem sind zwei Niederdruckspeicher 24 vorgesehen, von denen einer in Fig. 2 dargestellt ist. Das Gehäuse besteht jeweils aus einem Anbauteil 30, das als topfförmiges Tiefziehteil ausgebildet ist. Der Rand 31 des Anbauteils ist nach außen umgebördelt und in die Mündung einer Sacklochbohrung 32 im Ventilblock 1 eingesetzt und dort verstemmt, wobei die Wand der Sacklochbohrung 32 mit der Wand des Anbauteiles 30 fluchtet. Die Sacklochbohrung 32 ist stufenartig erweitert, wobei die Wände der Stufe 33 sowie der Bördelrand 31 eine Nut bilden, in der ein Dichtring 34 liegt.

Der Speicherkolben 35 wird ebenfalls von einem topfförmigen Tiefziehteil gebildet, das mit seiner offenen Seite in die offene Seite des Anbauteils 30 eingesteckt ist, so daß sich ein geschlossener, über eine Bohrung im Boden des Anbauteils 30 belüftbarer Raum bildet, in dem die Speicherfeder 36 des Niederdruckspeichers 24 angeordnet ist, die sich einerseits am Boden des Speicherkolbens 35 und andererseits am Boden des Anbauteils 30 abstützt. Der Außendurchmesser des Speicherkolbens 35 ist nur wenig kleiner als der Innendurchmesser der Sacklochbohrung 32 bzw. des Anbauteils 30, so daß der Speicherkolben 35 gut und ausreichend dicht geführt wird. Die Tiefe der Sacklochbohrung 32 entspricht dem maximalen Aufnahmevolumen des Niederdruckspeichers 24. Die Längenausdehnungen von Speicherkolben 35 und Anbauteil 30 sind so aufeinander abgestimmt, daß der Rand des Speicherkolbens 35 zur Anlage an den Boden des Anbauteils 30 gelangt, wenn das maximale Aufnahmevolumen erreicht ist. Dabei befindet sich der Boden des Speicherkolbens 35 noch in der Sacklochbohrung 32 unterhalb des Dichtrings 34. Bei einem leeren Niederdruckspeicher 24 liegt der Boden des Speicherkolbens 35 auf dem Boden der Sacklochbohrung 32 auf. Zur Verdeutlichung sind in der Fig. 2 beide Situationen (leerer/voller Speicher) im Halbschnitt gegenüberliegend dargestellt.

Die Sacklochbohrung 32 befindet sich unterhalb der Querbohrung 18, wie dies auch strichpunktiert in der Fig. 1 angedeutet ist. Dies ermöglicht es, eine gerade Verbindungsbohrung 40 zwischen der Sacklochbohrung 32 und der Querbohrung 18 zu ziehen.

Die Einmündung der Verbindungsbohrung 40 in die Sacklochbohrung 32 ist stufenartig erweitert und dient der Aufnahme eines Pumpensaugventils 41. Dieses besteht aus einem Teller mit einem zentralen Durchlaß 43 und einem ebenfalls tellerartigen Ventilschließglied 44 mit einer durch den Durchlaß 43 hindurchgreifenden axialen Verlängerung 45, die an ihren Enden hakenartig erweitert ist, um hinter einen umlaufenden Steg 46 um den Durchlaß 43 greifen zu können. Das Ventilschließglied 44 kann in den Durchlaß 43 des Tellers eingerastet werden, wodurch ein vormontiertes in die Mündung der Verbindungsbohrung 40 einsetzbares Pumpensaugventil 41 entsteht.

In ähnlicher Weise wird das Pumpendruckventil 50 gebildet, wobei zwischen den Haken 51 und dem Teller 52 noch eine Ventilfeder 53 vorgesehen ist, die den Öffnungsdruck des Pumpendruckventils 50 definiert. Das Pumpendruckventil wird in die Einmündung der Querbohrung 18 in eine ebenfalls als Sacklochbohrung ausgebildete Dämpfungskammer 60 eingesetzt, die von einer in eine Seitenfläche des Ventilblocks 1 eingesetzte Platte 61 verschlossen wird.

Durch die Wahl eines winkligen Schnitts bedingt, ist in der Fig. 2 nur ein Pumpenkolben 17, eine Dämpfungskammer 60 und ein Niederdruckspeicher 24 dargestellt. Tatsächlich sind, wie der Fig. 1 entnommen werden kann , zwei gegenüberliegende Einheiten vorgesehen, wobei sich die Pumpenkolben gegenüberliegend am Exzenter 17 abstützen.

Das Anbauteil 30 weist in etwa dieselbe Höhe auf wie die Aktuatoren der Ventile, die, wie der Fig. 1 zu entnehmen ist, in zwei Reihen parallel versetzt zu den Querbohrungen 18 angeordnet sind.

Fig. 3 zeigt eine Querbohrung 18 mit einer Dämpfungskammer 60 in einer anderen Schnittebene, wodurch erkennbar wird, daß die die Dämpfungskammer 60 bildende Sacklochbohrung versetzt zur Querbohrung 18 angeordnet ist. Parallel zur Querbohrung 18 verläuft eine Verbindungsbohrung 70 zu einem Druckmittelkanal 71, der in eine Seitenfläche des Ventilblocks 1 einmündet und dort einen Anschluß für den Hauptzylinder der Bremsanlage bildet.

Die Verbindungsbohrung 70 ist unmittelbar vor Einmündung in den Druckmittelkanal 71 stark verengt und bildet eine Blende 72, die zusammen mit der Dämpfungskammer 60 eine Geräuschreduzierung bewirkt.

Die Magnetspulen 23 und die Niederdruckspeicher 24, die auf der unteren Grundfläche 29 des Ventilblocks 1 angeordnet sind, werden von einer Gehäusekappe 75 überdeckt, in deren Boden der elektronische Regler 73 für den Elektromotor 2 und die Magnetspulen 23 angeordnet ist.

Die Gehäusekappe 75 verfügt über einen zentralen Haltestab 76, der in eine koaxial zur Stufenbohrung 15 angeordnete Bohrung 77 eingreift und verrastet ist. Die Gehäusekappe 75 umschließt vollständig den Raum, in dem die Magnetspulen 23 und die Niederdruckspeicher 24 angeordnet sind, so daß diese vor Umwelteinflüssen, Spritzwasser, Stößen usw. geschützt sind. Die Gehäusekappe 75 ragt auf der Seite, über die der Elektromotor 2 über den Ventilblock 1 hinausragt, ebenfalls über den Ventilblock hinaus, wobei ihre Seitenwand eine halbzylindrische Verlängerung 78 aufweist, die bis zum Elektromotor 2 geführt ist. Zwischen der Seitenfläche des Ventilblocks und der halbzylindrischen Verlängerung 78 bildet sich ein Kanal 79, durch den das Verbindungskabel 80 vom Elektromotor 2 zur Steuerungselektronik geführt ist. Das freie Ende der Verlängerung 78 liegt dichtend an dem Motorgehäuse 10 bzw. an dem Lagerschild 3 an.

### Bezugszeichenliste:

- 1: Ventilblock
- 2: Elektromotor
- 3: Lagerschild
- 4: Grundfläche
- 5: Radanschlüsse
- 6: Rand
- 10: Gehäuse
- 11: Rotor
- 12: Welle
- 13: Lager
- 14: Lager
- 15: Stufenbohrung
- 16: Exzenter
- 17: Pumpenkolben
- 18: Querbohrung
- 19: Pumpenraum
- 20: Bürstenköcher
- 21: Leiterbahnen
- 22: Bürsten
- 23: Magnetspulen
- 24: Niederdruckspeicher
- 29: Grundfläche
- 30: Anbauteil
- 31: Rand
- 32: Sacklochbohrung
- 33: Stufe
- 34: Dichtring
- 35: Speicherkolben
- 36: Speicherfeder
- 40: Verbindungsbohrung
- 41: Pumpensaugventil
- 43: Durchlaß
- 44: Ventilschließglied
- 45: Verlängerung
- 46: Steg
- 50: Pumpendruckventil
- 51: Haken
- 52: Teller
- 53: Ventilfeder
- 60: Dämpfungskammer
- 61: Platte
- 70: Verbindungsbohrung
- 71: Druckmittelkanal
- 72: Blende
- 73: elektronischer Regler
- 75: Gehäusekappe
- 76: Haltestab
- 77: Bohrung
- 78: Verlängerung
- 79: Kanal
- 80: Verbindungskabel

## Patentansprüche

1. Hydraulisches Aggregat bestehend aus einem mehrere Seiten- und Grundflächen aufweisenden metallischen Ventilblock (1), der von Druckmittelkanälen (40, 70, 71) durchzogen ist und mindestens ein elektromagnetisch betätigbares Ventil enthält, dessen Antrieb (23) außerhalb des Ventilblocks (1) angeordnet ist, mit einem Niederdruckspeicher (24) bestehend aus einem Gehäuse und einem darin geführten Speicherkolben (35), wobei ein Teil des Gehäuses ein mit dem Ventilblock (1) verbindbares Anbauteil (30) ist, das über eine Grundfläche (29) des Ventilblocks (1) hervorsteht, mit einem Kanal (79), der eine elektrische Verbindung zu einem Elektromotor (2) aufweist, der zum Antrieb einer im Ventilblock (1) angeordneten Pumpe (17, 18, 19) an einer weiteren Grundfläche (4) des Ventilblocks (1) angebracht ist, **dadurch gekennzeichnet, daß** mehrere elektromagnetische Antriebe (23) an der Grundfläche (29) nebeneinander neben dem Anbauteil (30) angeordnet sind, **daß** das Anbauteil (30) aus einem topfförmigen Tiefziehteil besteht, das mit seinem Rand (31) in einer in die Grundfläche (29) flach einmündenden Sacklochbohrung (32) befestigt ist, so **daß** das Anbauteil (30) in etwa die selbe Höhe wie die elektromagnetischen Antriebe (23) aufweist, **daß** die Sacklochbohrung (32) unterhalb einer Querbohrung (18) angeordnet ist, die einen Pumpkolben (17) aufnimmt, **daß** eine die Antriebe (23) der Ventile und das Anbauteil (30) überdeckende Gehäusekappe (75) an der Grundfläche (29) des Ventilblocks (1) befestigt ist, wobei die Gehäusekappe (75) einen Raum einschließt, in den das Anbauteil (30) hineinragt, und **daß** im oder am Boden der Gehäusekappe (75) ein elektronischer Regler (73) angeordnet ist, der über den Kanal (79) mit dem Elektromotor (2) verbunden ist.

2. Hydraulisches Aggregat nach Anspruch 1, **dadurch gekennzeichnet, daß** der Teil des Gehäuses, der vom Ventilblock (1) gebildet wird, ein Volumen radial umschließt, das in etwa dem maximalen Speichervolumen des Niederdruckspeichers (24) entspricht.

3. Hydraulisches Aggregat nach Anspruch 1, **dadurch gekennzeichnet, daß** die Sacklochbohrung (32) stufig erweitert ist, wobei in der Erweiterung ein Dichtring (34) liegt, der einerseits vom von der Stufe (33) gebildeten Absatz in Ventilblock (1) und andererseits vom umgebördelten Rand (31) des Anbauteils (30) gehalten wird.

4. Hydraulisches Aggregat nach Anspruch 1, **dadurch gekennzeichnet, daß** der Speicherkolben (35) aus einem topfförmig tiefgezogenem Blech gebildet ist, der mit seiner offenen Seite in das Anbauteil (30) eingeführt ist.

5. Hydraulisches Aggregat nach Anspruch 1, **dadurch gekennzeichnet, daß** zwischen der Sacklochbohrung (32) und einer einen Pumpenkolben aufnehmenden Querbohrung (18) eine gerade Verbindungsbohrung (40) verläuft.

6. Hydraulisches Aggregat nach Anspruch 5, **dadurch gekennzeichnet, daß** in der Einmündung der Verbindungsbohrung (40) in die Sacklochbohrung (32) ein ein Pumpensaugventil (41) bildendes Rückschlagventil eingesetzt ist.

7. Hydraulisches Aggregat nach einem der vorhergehenden Ansprüche, **dadurch gekennzeichnet, daß** die einen Pumpenkolben aufnehmende Querbohrung (18) in eine Seitenfläche des Ventilblocks (1) einmündet und der Mündungsbereich zur Bildung einer Dämfungskammer (60) erweitert ist.

8. Hydraulisches Aggregat nach Anspruch 7, **dadurch gekennzeichnet, daß** die Dämfungskammer (60) mittels einer Platte (61) verschlossen ist.

9. Hydraulisches Aggregat nach Anspruch 7, **dadurch gekennzeichnet, daß** in die einen Pumpenkolben aufnehmende Querbohrung (18) im Übergang zur Dämpfungskammer (60) ein als Pumpendruckventil (50) ausgebildetes Rückschlagventil angeordnet ist.

10. Hydraulisches Aggregat nach Anspruch 9, **dadurch gekennzeichnet, daß** die Rückschlagventile (41, 51) aus einem Ventilsitzkörper (52) mit einem Durchlaß (43) und einem Ventilschließglied (44) bestehen, wobei das Ventilschließglied (44) eine Verlängerung (45) aufweist, die durch den Durchlaß (43) hindurchgreift und an ihrem freien Ende seitlich über den Querschnitt des Durchlasses hervorstehende Haken aufweist.

11. Hydraulisches Aggregat nach Anspruch 8, **dadurch gekennzeichnet, daß** von der Dämpfungskammer (60) zu einem Druckmittelkanal (71) eine Verbindungsbohrung (70) führt, die kurz vor der Einmündung in den Druckmittelkanal (71) zu einer Blende (72) verengt ist.

12. Hydraulisches Aggregat nach Anspruch 1, dadurch **gekenn** **zeichnet,** daß die Gehäusekappe (75) eine größere seitliche Ausdehnung aufweist als der Ventilblock (1).

13. Hydraulisches Aggregat nach Anspruch 1, **dadurch gekennzeichnet, daß** ein Abschnitt der Seitenwand der Gehäusekappe (75) am Ventilblock (1) vorbeigeführt ist, einen Halbzylinder formt, der mit der Seitenfläche des Ventilblocks (1) den im Querschnitt halbkreisförmigen Kanal (79) bildet, durch den eine Verbindungsleitung (80) gelegt ist.

## Claims

1. Hydraulic unit comprising a metal valve block (1) with a plurality of lateral and base surfaces, through which pressure fluid channels (40, 70, 71) extend and in which at least one electromagnetically operable valve is incorporated, having a drive (23) that is arranged outside the valve block (1), with a low-pressure accumulator (24) composed of a housing and an accumulator piston (35) guided therein, wherein part of the housing is an add-on piece (30) which is connectable to the valve block (1) and projects from a base (29) of the valve block (1), with a channel (79) that has an electrical connection to an electric motor (2) which is mounted on another base (4) of the valve block (1) to drive a pump (17, 18, 19) arranged in the valve block (1),
**characterized in that** several electromagnetic drives (23) are arranged on the base (29) side by side and adjacent to the add-on piece (30), **in that** the add-on piece (30) has the shape of a bowl made of a deepdrawn part and is attached with its edge (31) in a blind-end bore (32) which opens flatly into the base (29) so that the add-on piece (30) roughly has the same level as the electromagnetic drives (23), **in that** the blind-end bore (32) is arranged below a transverse bore (18) which accommodates a pump piston (17), **in that** a housing cap (75) that covers the drives (23) of the valves and the add-on piece (30) is attached to the base (29) of the valve block (1), the said housing cap (75) enclosing a space into which the add-on piece (30) projects, and **in that** an electronic controller (73) is arranged in or on the bottom of the housing cap (75) and is connected to the electric motor (2) by way of the channel (79).

2. Hydraulic unit as claimed in claim 1,
**characterized in that** the part of the housing which is formed by the valve block (1) radially encloses a volume that corresponds roughly to the maximum storage volume of the low-pressure accumulator (24).

3. Hydraulic unit as claimed in claim 1,
**characterized in that** the blind-end bore (32) is steplike expanded, and a sealing ring (34) is positioned in the expansion which is retained by the shoulder formed by step (33) in valve block (1), on the one hand, and by the beaded edge (31) of the add-on piece (30), on the other hand.

4. Hydraulic unit as claimed in claim 1,
**characterized in that** the accumulator piston (35) is deepdrawn from sheet metal in a bowl-type configuration and introduced with its open side into the add-on piece (30).

5. Hydraulic unit as claimed in claim 1,
**characterized in that** a straight connecting bore (40) extends between the blind-end bore (32) and a transverse bore (18) that accommodates a pump piston.

6. Hydraulic unit as claimed in claim 5,
**characterized in that** a non-return valve which forms a pump suction valve (41) is inserted into the mouth of the connecting bore (40) opening into the blind-end bore (32).

7. Hydraulic unit as claimed in any one of the preceding claims,
**characterized in that** the transverse bore (18) which accommodates a pump piston opens into a lateral surface of the valve block (1) and the mouth area is extended to form a damping chamber (60).

8. Hydraulic unit as claimed in claim 7,
**characterized in that** the damping chamber (60) is closed by way of a plate (61).

9. Hydraulic unit as claimed in claim 7,
**characterized in that** a non-return valve configured as pump pressure valve (50) is arranged in the transverse bore (18) which accommodates a pump piston in the transition to the damping chamber (60).

10. Hydraulic unit as claimed in claim 9,
**characterized in that** the non-return valves (41, 51) comprise a valve seat member (52) with a passage (43) and a valve closure member (44), and the valve closure member (44) has an extension (45) which grips through the passage (43) and includes at its free end hooks which project laterally from the cross-section of the passage.

11. Hydraulic unit as claimed in claim 8,
**characterized in that** a connecting bore (70) extends from the damping chamber (60) to a pressure-fluid channel (71) and is narrowed to form an orifice (72) shortly in front of its mouth opening into the pressure-fluid channel (71).

12. Hydraulic unit as claimed in claim 1,
**characterized in that** the housing cap (75) has a larger lateral length than the valve block (1).

13. Hydraulic unit as claimed in claim 1,
**characterized in that** a portion of the lateral wall of the housing cap (75) extends past the valve block (1) and forms a semi-cylinder which, along with the lateral surface of the valve block (1), forms the channel (79) which is semicircular in cross-section and through which a connecting line (80) is passed.

## Revendications

1. Unité hydraulique constituée par un bloc métallique à soupapes (1) qui comporte plusieurs surfaces latérales et de base, qui est traversé par des canaux (40, 70, 71) pour un fluide sous pression et contient au moins une soupape pouvant être actionnée par voie électromagnétique, dont le dispositif d'entraînement (23) est disposé à l'extérieur du bloc à soupapes (1), et comportant un accumulateur basse pression (24) constitué par un boîtier et un piston d'accumulateur (35) guidé dans ce boîtier, une partie du boîtier étant un élément rapporté (30), qui peut être relié au bloc à soupapes (1) et qui fait saillie au-delà d'une surface de base (29) du bloc à soupapes (1), et comportant un canal (79), qui comporte une liaison électrique avec un moteur électrique (2), qui est monté pour l'entraînement d'une pompe (17, 18, 19) disposée dans le bloc à soupapes (1), sur une autre surface de base (4) du bloc à soupapes (1), **caractérisée en ce que** plusieurs dispositifs d'entraînement électromagnétique (23) sont disposés sur la surface de base (29) côte-à-côte à côté de l'élément rapporté (30), **que** l'élément rapporté (30) est constitué par une pièce emboutie en forme de pot, qui est fixée par son bord (31) dans un perçage borgne (32) qui débouche à plat dans la surface de base (29), de sorte **que** l'élément rapporté (30) possède approximativement la même hauteur que les dispositifs d'entraînement électromagnétique (23), **que** le perçage borgne (32) est disposé au-dessous d'un perçage transversal (18), qui loge un piston de pompe (17), qu'un capot de boîtier (75), qui recouvre les dispositifs d'entraînement (23) des soupapes et l'élément rapporté (30), est fixé sur la surface de base (29) du bloc à soupapes (1), le capot (75) du boîtier renfermant un espace, dans lequel l'élément rapporté (30) fait saillie, et **que** dans ou sur le fond du capot (75) du boîtier est disposé un régulateur électronique (73), qui est relié au moteur électrique (2) par l'intermédiaire du canal (79).

2. Unité hydraulique selon la revendication 1, **caractérisée en ce que** la partie du boîtier, qui est formée par le bloc à soupapes (1), entoure radialement un volume qui correspond approximativement au volume maximum de l'accumulateur basse pression (24).

3. Unité hydraulique selon la revendication 1, **caractérisée en ce que** le perçage borgne (32) est élargi avec un forme étagée, et que dans l'élargissement est disposé une bague d'étanchéité (35) qui est retenue d'une part par l'épaulement, formé par la partie étagée (33), dans le bloc à soupapes (1) et d'autre part par le bord rabattu (31) de l'élément rapporté (30).

4. Unité hydraulique selon la revendication 1, **caractérisée en ce que** le piston (35) de l'accumulateur est formé par une tôle emboutie en forme de pot, qui est introduite par son côté ouvert dans l'élément rapporté (30).

5. Unité hydraulique selon la revendication 1, **caractérisée en ce qu'**un perçage de liaison rectiligne (40) s'étend entre le perçage borgne (32) et un perçage transversal (18) recevant un piston de pompe.

6. Unité hydraulique selon la revendication 5, **caractérisée en ce qu'**une soupape antiretour qui forme une soupape d'aspiration (41) de la pompe est insérée dans l'embouchure du perçage de liaison (40) à l'intérieur du perçage borgne (32).

7. Unité hydraulique selon l'une des revendications précédentes, **caractérisée en ce que** le perçage transversal (18), qui loge un piston de la pompe, débouche dans une surface latérale du bloc à soupapes (1) et que la zone de l'embouchure est élargie pour former une chambre d'amortissement (60).

8. Unité hydraulique selon la revendication 7, **caractérisée en ce que** la chambre d'amortissement (60) est fermée au moyen d'une plaque (61).

9. Unité hydraulique selon la revendication 7, **caractérisée en ce qu'**une soupape antiretour agencée sous la forme d'une soupape de refoulement (50) de la pompe est disposée dans le perçage transversal (18), qui loge un piston de pompe, à la jonction avec la chambre d'amortissement (60).

10. Unité hydraulique selon la revendication 9, **caractérisée en ce que** les soupapes antiretour (41, 51) sont constituées par un corps (52) formant siège de soupape, comportant un passage (43), et un organe (44) de fermeture de soupape, l'organe (44) de fermeture de soupape possédant un prolongement (45), qui traverse le passage (43) et possède sur son extrémité libre, des crochets qui font saillie latéralement au-delà de la section transversale du passage.

11. Unité hydraulique selon la revendication 8, **caractérisée en ce que** la chambre d'amortissement (60) est reliée à un canal (71) pour le fluide sous pression par un perçage de liaison (70), qui est rétréci peu avant de déboucher dans le canal (71) pour le fluide sous pression, pour former un diaphragme (72).

12. Unité hydraulique selon la revendication 1, **caractérisée en ce que** le capot (75) du boîtier possède une étendue latérale supérieure à celle du bloc à soupapes (1).

13. Unité hydraulique selon la revendication 1, **caractérisée en ce qu'**une partie de la paroi latérale du capot (75) du boîtier s'étend devant le bloc à soupapes (1), et forme un demi-cylindre, qui constitue, avec la surface latérale du bloc à soupapes (1), le canal (79), qui possède une forme semi-circulaire en coupe transversale et dans lequel est disposée une canalisation de liaison (80).
